Europäisches Patentamt

European Patent Office

Office européen des brevets

(11) Publication number: **0 087 246**
**B1**

(12) **EUROPEAN PATENT SPECIFICATION**

(45) Date of publication of patent specification: **30.07.86**

(51) Int. Cl.⁴: **A 23 J 3/00**

(21) Application number: **83300643.0**

(22) Date of filing: **09.02.83**

(54) Process for the preparation of protein for hydrolysis.

(30) Priority: **22.02.82 US 350844**

(43) Date of publication of application:
**31.08.83 Bulletin 83/35**

(45) Publication of the grant of the patent:
**30.07.86 Bulletin 86/31**

(84) Designated Contracting States:
**BE CH DE FR GB IT LI NL SE**

(56) References cited:
**EP-A-0 029 370**
**EP-A-0 029 692**
**AU-A- 433 638**
**US-A-3 857 966**

(73) Proprietor: **STAUFFER CHEMICAL COMPANY**
**Westport Connecticut 06880 (US)**

(72) Inventor: **Lee, Chang Rae**
**14 Skywood Court**
**Yonkers New York 10710 (US)**

(74) Representative: **Smith, Sydney et al**
**Elkington and Fife High Holborn House**
**52/54 High Holborn**
**London WC1V 6SH (GB)**

Courier Press, Leamington Spa, England.

## Description

The invention relates to processes for enzymatically hydrolyzing proteinaceous solutions, particularly to provide organoleptically desirable protein hydrolysate compositions which can be used for dietary purposes and in particular for hospital diets.

It is well known that proteins can be digested with strong acid or alkali or with enzymes and used in diet foods. Hydrolysis of the protein takes place with the subsequent formation of protein fragments, peptides and amino acids. Fragmented protein materials of this type are desirable products for administration to humans and animals with digestive problems. However, the primary problem relative to the adoption of these techniques is the palatability of the product.

Of the known means to hydrolyze protein, enzymatic hydrolysis is preferred since it does not destroy essential amino acids to the extent that they are destroyed by acid or alkaline hydrolysis. However, enzymatic hydrolysis rarely goes to completion and the products of the enzymatic hydrolysis cannot be predicted and frequently the hydrolyzed protein is unsuitable because it contains bitter-tasting peptides. Products of this type to be effective as diets must be organoleptically acceptable. (Dietary Enzymatic Hydrolysates of Protein with Reduced Bitterness, Clegg et al., J. Food Tech. (1974) 9, 21—29).

In U.S. Patent 3,857,966 there is disclosed a method for preparing an egg albumen hydrolysate which does not contain the characteristic egg smell and taste. Egg albumen in a 5% solution (pH 6.3—6.4) is heated to precipitate the protein. After cooling, the precipitate is separated by centrifugation, homogenized in a Waring blender and centrifuged again. The washing step is repeated once more and the washed precipitate is used to make a 5% protein suspension for hydrolysis.

After heating (95—100°C) the protein suspension at an alkaline pH (pH 8—9) for about 1 hour, enzymatic hydrolysis is then conducted using a two-stage enzyme system of an alkaline microbial protease in the first stage and a blend of neutral microbial protease and a plant enzyme in the second stage. Similar techniques are indicated in the patent to be applicable to soy protein isolate, whey or whey protein and fish protein.

The pretreatment is a necessary part of the egg albumen hydrolysis procedure since very little hydrolysis can be obtained in a short period of time without it.

U.S. 4,107,334 uses a similar precipitation technique to prepare the functional protein from microbial, or vegetable protein, or whey by hydrolysis. Generally a solution of low solids and protein content is preferably adjusted to a pH of about the isoelectric point of the protein (4—7) and heated until a large proportion of the protein (at least 50%) has been precipitated (for whey protein concentrate — 90°C for 2 minutes).

After washing the protein is hydrolyzed using any acid, neutral or alkaline protease (fungal protease suggested).

The value of a protein hydrolysate in a special diet program depends in large part on the degree of hydrolysis. For instance, for the use of a hydrolysate for patients with digestion problems, at least 80% of the hydrolysate should be in the form of peptides of 500 molecular weight or less and 95% of the hydrolysate should be in the form of peptides of less than 2000 molecular weight. Such an extensive hydrolysis may have the disadvantages of long uneconomical reaction times, organoleptic problems, and biological contamination problems.

Untreated egg albumen only hydrolyzes to a limited extent over a long period of time. Extensive precipitation and purification pretreatment steps are necessary to effectively hydrolyze egg albumen.

The Invention

It has now been found that an improved hydrolysate as well as an improved hydrolysis rate can be obtained without extensive precipitation and separation techniques by heating a solution of a water-soluble protein at an alkaline pH to a temperature within the range of from about 50°C and 150°C at a temperature and for a time insufficient to gel the solution, cooling the solution to a temperature below 30°C and about 2°C within at least about 60 minutes after reaching the elevated temperature at a rate sufficient to prevent any further substantial change in the protein structure, and enzymatically hydrolyzing the protein in the so treated solution.

Preferably, the alkaline pH is readjusted to below pH 7.5 and above pH 6 and preferably within the range of from 6.5 to about 7.5 prior to hydrolysis. Cooling is generally initiated within 1 hour and preferably within 30 minutes after the temperature of the solution has reached its maximum level. Cooling is conducted at a rate sufficient to prevent any further substantial change in the protein and to avoid gelation of the protein containing solution.

It has also been found that by the use of fungal protease and pancreatin good yields in short reaction times with limited organoleptic problems can be obtained.

Detailed Description of the Invention

The process of the present invention can be successfully employed to hydrolyze proteins from any source provided that at least 50% by weight of the protein is soluble in water at alkaline pH, i.e. from about pH 7 to about pH 10. Animal proteins include egg albumen, whey protein, water-soluble fish protein, and the like. The whey protein can be derived from any cheese source and is preferably concentrated though dried whey can also be used. Microbial protein may be derived from yeast (e.g. genera Saccharomyces, Candide, Hansenula, and Pichia), bacteria (e.g. genera Pseudomonas, Lactobacillus, Streptococcus, Micrococcus, Cellulomonas, Arthrobacter, Bacillus, Hydrogenomonas, and Aerobacter) and fungi (e.g. genera Trichoderma, Fusarium, Penicillium, Aspergillus, Neurospora, and Endomycopsis). The microbial cells are initially ruptured and the cell protein content separated from the cell debris by conventional techniques prior to processing.

Suitable vegetable protein sources include, for example, soybeans, wheat gluten, cottonseeds, okra, corn gluten, peanuts, potatoes, alfalfa, oats, rice, rapeseeds, sesame seeds and sunflower seeds. Preferred sources are soybeans, wheat gluten and cottonseeds. Especially preferred are soybeans in such forms as soy grits, solvent-extracted soybean flakes, soy flour, alcohol-treated soy flakes, soy concentrate, soy isolate and soy whey. The protein source is usually slurried in water, any undissolved material is separated, and the liquid phase is introduced into the process. Vegetable protein whey, like cheese whey, may be processed directly.

The dairy whey proteins can be provided by raw or concentrated whey or by whey proteins containing products such as clarified dairy whey (clarified by the processes of U.S. Patent No. 3,560,219 or U.S. Patent No. 4,036,999), demineralized whey, delactosed whey, delactosed demineralized whey, and the like. Preferably, the whey protein is used in the form of a whey protein concentrate (WPC) containing at least 30% and preferably from about 40% to 60% protein. Whey protein concentrates containing 100% and preferably about 90% protein can also be used but these are impractical from a commercial standpoint.

The whey protein concentrates can be prepared by any one of a number of known processes including electrodialysis (Stribley, R. C., Food Processing, Volume 24, No. 1, page 49, 1963), reverse osmosis, (Marshall, P. G. et. al., Fractionation and Concentration of Whey by Reverse Osmosis, Food Technology, 22 (a), 696, 1968); gel filtration (U.S. Reissue Patent No. 27,806); ion exchange (Palmer, D. E., "High Purity Protein Recovery", Process Biochemistry, Volume 12 (No. 5) June 1977, pages 24—28); or by ultrafiltration (Horton, B. S. et al., Food Technology, Volume 26, page 30, 1972). Chemical methods including the phosphate precipitation of whey protein can also be used as described in Gordon Patent No. 2,388,624 and Melachouris Patent No. 4,043,990. The whey protein concentrate preferably contains from about 40% to about 60% protein based on total Kjeldahl nitrogen. Preferred among these are whey products containing at least 40% protein, egg albumen in either liquid, fresh or powdered form, whey protein and soy protein concentrates as well as undenatured fish protein.

The protein source can be selected from those which are available commercially or they can be prepared according to techniques well known to the art. Such commercially available protein include SUPRO soy isolate, whey protein concentrate (40—90% protein), egg albumen, and fish protein (e.g. Atra-Nabisco EFP-90 eviscerated fish protein).

Since the hydrolysate used in hospital diets should be as low in lactose and ash as possible to avoid digestion problems, it is preferred to utilize as the protein source for hydrolysis a material which is high in protein and low in lactose. For these reasons, egg albumen is a preferred protein source.

The protein containing solution to be treated does not require a minimum amount of protein for effective treatment. Thus, a protein concentration ranging from about 1% to about 20% can be treated. It is preferred not to use a protein solution having more than 15% protein in solution since the conditions of the reaction tend to gel solutions with protein content greater than 15% before completion of the treatment.

Subsequently, the pH is adjusted to an alkaline range of from about pH 7.0 to about pH 10, preferably from pH 8 and more preferably for whey proteins (dairy) and egg albumen from about pH 9 to about pH 10. Any food grade alkalizing agent which does not interfere with the final reaction product and/or its use can be used such as potassium hydroxide and preferably sodium hydroxide. Calcium hydroxide, while being an effective alkalizing agent, is less preferred since calcium can cause protein crosslinking and, therefore, insolubilization. Other methods of elevating the pH can be used such as passing the protein system through an anionic/cationic exchange resin.

The alkalizing agent is added under conditions which will not cause localized pH elevations above about pH 10 to thereby avoid extensive protein denaturation.

The alkaline whey protein solution is then heated to a temperature within the range from about 50°C up to the gelation temperature of the protein for a time insufficient to cause gelation. The heating temperature preferably ranges from about 50°C to about 150°C, more preferably 50°C to about 95°C, and most preferably from about 50°C to about 80°C. The temperature should be elevated as fast as possible without causing protein insolubilization by gelation since long time heating causes the formation of disulfide linkages between protein molecules. The maximum heating time is the gelation point of the protein. The heating time should not be over a maximum of 1 hour and preferably less than 30 minutes and more preferably less than 15 minutes. The heating is conducted at a rate such that the solution is not gelled. The alkali can be added to a heated solution or the alkalization and heating can be conducted simultaneously, particularly using a heating unit that will elevate the temperature rapidly.

After the alkalized whey protein solution has reached the maximum temperature level, cooling is preferably immediately applied to reduce the temperature of the solution below that at which further change in the protein structure occurs and preferably to room temperature. Adequate agitation is necessary to insure that cooling is uniform throughout the mass. The cooling rate and temperature are relative to the heating rate and temperature as well as the activation point of the protein so that the cooling retards further unfolding of the protein. Therefore, cooling must be initiated within 1 hour after the completion of the heating step and preferably in less than 15 minutes depending on the activation point of the protein and the temperature used. In order to prevent gelation of the protein, the heat must be lowered rapidly to below at least about 60°C within less than about 1 minute to prevent further change in the protein structure or initiate protein to protein interaction. Under these conditions, high temperature short time pasteurization can effectively be used to heat the alkaline whey protein containing solution to a temperature within the range of from about 70°C to about 75°C and cool within a minute, preferably 1/2 minute.

Subsequent to cooling, the pH is preferably adjusted to a range of about 6 to about 7.5 and preferably from about 6.5 to about 7.0 with any food grade acid with agitation. Since the cooling step is conducted with rapid stirring, it is possible to adjust the pH during the cooling step. The pH utilized can be that most effective for the enzymes used in the hydrolysis.

The foregoing procedure is more fully set out in EP—A—29370 and EP—A—29692.

As an optional step, the solution can be subjected to pasteurization conditions well known to a skilled artisan. The product can also be heated to destroy any enzyme inhibitors, generally from about 65°C to about 90°C for a minimum of about 1 minute though this has not been found to be essential for high yields.

The material obtained at this point with or without the pasteurization can then be dried or subjected to hydrolysis using standard known techniques such as outlined in U.S. Patents 3,857,966 and 4,107,334.

The pretreated protein is dispersed, generally in an aqueous medium, for hydrolysis. The concentration of protein in the dispersion is not critical and normally ranges from about 1% to about 20% and preferably from about 3% to about 9% based on the total weight of the dispersion. Any hydrolysis means can be used including chemical such as acid, alkali or enzymatic, the enzymatic being preferred. Any acid, neutral or alkaline protease, any animal or plant protease or combinations thereof can be used for hydrolysis. Any blends of enzymes can be used if desired.

The minimum level of proteolytic activity is related to the practical rate of the hydrolysis, the maximum level is determined solely by economics. A crude enzyme may require too great an amount to provide a practical hydrolysis rate whereas a highly purified enzyme can be too expensive for practical use. A practical operating range for the proteolytic enzyme level can be easily determined by a skilled artisan.

The temperature and the pH of the hydrolysis will depend upon the nature of the protein hydrolyzed and the proteolytic enzyme employed, and are selected to optimize the conversion of the denatured protein to hydrolysates. Convenient temperatures range from about 20° to 65°C. Below 20°C, the hydrolysis proceeds at a rather slow rate, while at temperatures above 65°C the enzyme may be inactivated. The optimum temperature normally ranges from about 40°C to about 55°C.

At the completion of the hydrolysis reaction, the resulting protein solution is treated to inactivate the enzyme. The method of treatment will depend upon the nature of the enzyme, but the inactivation is usually accomplished by heating the reaction solution to from about 75° to 100°C for from about 1 to 60 minutes. Depending on the enzyme employed, such treatment may be accompanied by a pH adjustment (pH 6—8 being preferred).

It has also been found that the use of a combination of fungal protease and pancreatin as disclosed in EP—A—Publication No. 0 087 247 provides a fast and efficient enzyme system for hydrolyzing a proteinaceous material prepared by the aforementioned pre-treatment process. The hydrolysis reaction can be completed in a shorter time at a higher degree of digestion thereby avoiding flavor and microbiological contamination problems. The product, especially after a post-clarification treatment, is a clear solution high in short chain peptides, low in ash and having good organoleptic properties.

A fungal protease can be derived from the genus Aspergillus illustrated by *A. oryzae, A. flavus, A. niger*, and particularly *A. oryzae*. Known enzyme preparations from *A. oryzae* are mixtures of acid, neutral and alkaline proteases demonstrating both exopeptidase and endopeptidase activity on protein molecules. The activity of fungal protease is generally within the range of from about 1,000 to about 100,000 and preferably from about 8,000 to about 20,000 hemoglobin units per gram of protein in the starting material. One hemoglobin unit is that amount of enzyme which will liberate 0.0447 mg of non-protein nitrogen in 30 minutes. The optimum temperature for effective use of the fungal protease from *A. oryzae* ranges from about 40°C to about 60°C and preferably from about 45°C to about 55°C.

The pancreatin is a pancreas extract which can be obtained from porcine, ovine or bovine. The proteolytic enzymes in the pancreatin are principally trypsin, chymotrypsin (A, B and C), elastase, and carboxypeptidase (A and B). The pancreatin is processed such that substantially all (at least 70%) of the exo- and endopeptidases originally extracted from the pancreas source remains in the pancreatin. The protease activity for the pancreatin can range from about 1,000 to about 100,000 and preferably from about 8,000 to about 20,000 N.F. units per gram of protein in the starting material. One N.F. unit of protease activity is contained in that amount of pancreatin that digest 1 milligram of casein under the conditions of the N.F. Assay for the activity of the enzyme. The optimum pH range for use depends on the enzyme activity desired. The optimum pH range for trypsin ranges from about 7 to about 9.

Optimum temperature range for use is up to 50°C (preferably about 40°C to about 50°C).

The units used to express the activity of proteases are well known to the art and are clearly defined in such references as the First Supplement to the Food Chemical Codex, Second Edition, 1974.

The fungal protease is used in a ratio to the pancreatin within the range of about 1:1 to about 1:5 and preferably from about 1:3 to about 1:4. This is the ratio of the total amount of fungal protease to pancreatin used in the hydrolysis. The hydrolysis can be conducted using a one or two stage introduction of the enzymes. The proteinaceous material can be partially hydrolyzed with fungal protease and, after heat inactivation, further hydrolyzed with pancreatin alone or preferably with a combination of fungal protease and pancreatin. In this case the ratio of fungal protease to pancreatin added in the second stage ranges from about 1:1 to about 1:5, the total ratio of fungal protease to pancreatin being as given hereinbefore. The proteinaceous material can also be hydrolyzed using only the combination of fungal protease and pancreatin. To avoid one enzyme from hydrolyzing the other, the enzymes are usually added separately allowing about 1 minute for the first enzyme (fungal protease) to establish itself before addition of the second (pancreatin).

In the two step hydrolysis, the first stage is allowed to proceed for at least 5 hours and preferably from about 6 to about 8 hours though longer times can be used if desired. The second stage is allowed to proceed for a period of time sufficient to provide the degree of hydrolysis desired, usually from about 12 to about 17 hours. In the single stage hydrolysis, the reaction can be allowed to proceed for at least 6 hours and preferably from about 6 to about 8 hours. The degree of hydrolysis is related to the period of incubation, the shorter the incubation time the lower the degree of hydrolysis.

At the conclusion of the first stage or the second stage, the enzymes are inactivated by known procedures usually by heating, i.e. 90°C for 5—10 minutes or 75°C for 30—60 minutes and variations thereof. A combination of pH and temperature adjustments may be used for inactivation when the use of high temperatures is undesirable. The product can also be pasteurized at this point in the process. After cooling, the product can be dried, used as is or further processed to improve clarity such as by centrifugation and/or filtering.

It has also been found desirable to incorporate an adsorbent such as activated carbon or bentonite in an amount ranging from about 25% to about 200% based on the weight of the protein used to prepare the hydrolysates in the liquid to improve flavor and color. After separation of the adsorbent (filtration and/or centrifugation), the hydrolysate can be dried by any suitable means such as freeze drying or spray drying.

The hydrolysates, either before separation or after separation and/or drying, can be employed in a wide variety of food substrates to increase the nutritional value thereof. For example the hydrolysates can be used in dry beverage mixes, soft drinks, fruit juices, flavored liquid beverages and the like with no adverse effect on the organoleptic characteristics of the beverages. The most direct use of the hydrolysate is in a liquid special diet. This generally takes the form of a flavored emulsion with characteristics of a milk shake. Frozen slushes can also be prepared containing the hydrolysate.

As used herein all percentages are by weight based on the weight of the composition referred to unless otherwise stated.

Protein amounts are determined by the Kjeldahl method.

The invention will be further illustrated in the Example which follows.

### Example 1

A commercially obtained dried egg albumen was dissolved in an aqueous solution to provide approximately 10% (W/V) total solids in solution at room temperature. The pH of the solution was about 7. The pH was adjusted to about pH 9.5 by the slow addition of sodium hydroxide with rapid stirring. The alkaline egg albumen solution was heated to 60°C and immediately rapidly cooled to below about 50°C. After reaching room temperature, the pH of the solution was adjusted to about 7 by the slow addition of hydrochloric acid. To this solution was added 0.25% (W/V) commercial fungal protease having an activity of 384,000 hemoglobin units per gram enzyme. This is equivalent to an activity of 11,707 hemoglobin units per gram protein in substrate. The solution was incubated for 6 hours at 50°C with stirring. The pH was then adjusted to pH 9.5 by the slow addition of sodium hydroxide with stirring. After heating to about 75°—80°C, the solution was immediately cooled and the pH adjusted to pH 8. 0.25% (W/V) of commercial pancreatin containing 100 N.F. units per milligram was added and the solution was incubated for 17 hours at 45°C. The enzymes were inactivated by heating to 85—100°C for a sufficient time to effect inactivation and pasteurization. The solution was centrifuged at 650 gravities for 1 hour and filtered. The supernatant was freeze dried. The yield which was calculated after heating to 85°C, centrifuging and filtering was 77% after only 23 hours of incubation. The percent soluble nitrogen in 15% trichloroacetic acid was 69% of the starting egg albumen nitrogen.

The foregoing procedure was compared to a like process without the first two heating steps (the heating before and after the first incubation step). The egg albumen hydrolysis was incomplete even after 48 hours and looked like a paste when heated to 85°C. The coagulated hydrolysate could not be filtered and showed poor separation upon centrifugation.

## Claims

1. A process for enzymatically hydrolyzing a proteinaceous material comprising:
   a) adjusting the pH of an aqueous solution of a proteinaceous material to a pH within the range of from 7.5 to 10 and at least 0.5 pH units above the native pH of the solution of proteinaceous material, the solution having a temperature of less than 30°C, the total dissolved protein content being within the range of from 0.5% to 20% by weight when determined at said pH;
   b) heating the alkaline solution of step a) to an elevated temperature within the range of from 50°C and 150°C, at a rate insufficient to cause gelation of the solution;
   c) cooling the heated solution to a temperature within the range of from 30°C to 2°C within 1 hour after the solution reaches its maximum temperature level, the cooling being conducted at a rate sufficient to prevent gelation of the protein containing solution; and
   d) enzymatically hydrolyzing the protein in the so treated solution.

2. A process as claimed in claim 1 characterised in that the pH of step a) is within the range of from 8 to 10.

3. A process as claimed in claim 1 or claim 2 characterised in that the pH of the solution is reduced to a pH within the range of from 6 to 7.5, preferably 6.5 to 7.5, simultaneously with or subsequent to cooling.

4. A process as claimed in any of claims 1 to 3 characterised in that the solution contains from 1% to 20% protein.

5. A process as claimed in any of claims 1 to 4 characterised in that the temperature of step b) is within the range of 50°C to 80°C.

6. A process as claimed in any of claims 1 to 5 characterised in that the protein is enzymatically hydrolyzed with fungal protease and pancreatin.

7. A process as claimed in claim 6 characterised in that the protein is first reacted with fungal protease followed by reacting the protein with fungal protease in combination with pancreatin.

8. A process as claimed in claim 6 characterised in that the protein is hydrolyzed with fungal protease in combination with pancreatin.

9. A process as claimed in claim 6 characterised in that the ratio of fungal protease to pancreatin ranges from about 1:1 to about 1:5.

10. A process as claimed in claim 6 characterised in that the fungal protease has an activity of from 1,000 to 100,000 hemoglobin units preferably 8,000 to 20,000 hemoglobin units per gram of protein in the starting material.

11. A process as claimed in claim 7 or claim 10 characterised in that the pancreatin has an activity of from 1,000 to 100,000 N.F. units preferably 8,000 to 20,000 N.F. units per gram of protein in the starting material.

12. A process as claimed in any of claims 1 to 11 characterised in that the said proteinaceous material is vegetable protein or animal protein or microbial protein.

13. A process as claimed in claim 12 characterised in that the protein is soy, egg albumen; dairy protein; fish protein; or microbial protein.

14. A process as claimed in any of claims 1 to 13 characterised in that the product of hydrolysis is treated with an adsorbent to purify the product, in particular activated carbon.

15. A process for enzymatically hydrolyzing egg albumen which comprises:
   a) adjusting the pH of an aqeuous solution of egg albumen to a pH within the range of from 7 to 9.5 and at least 0.5 pH units above the natural pH of the egg albumen in solution the dissolved protein content ranging from 0.5% to 20% by weight when determined at that pH;
   b) heating the alkaline solution to an elevated temperature within the range of from 50°C to 80°C at a rate insufficient to cause gelation of the solution;
   c) cooling the heated solution to a temperature within the range of from 30°C to 2°C within 15 minutes after the solution reaches maximum temperature, the cooling being conducted at a rate sufficient to prevent gelation;
   d) adjusting the pH to a pH within the range of from 6 to 7.5;
   e) adding fungal protease at an activity of from 1,000 to 100,000 hemoglobin units per gram of protein in the starting material;
   f) incubating the solution for a period ranging from 5 to 10 hours at a temperature ranging from 45° to 55°C;
   g) adjusting the pH as in step a);
   h) heating the alkaline solution to a temperature within the range of from 75° to 80°C;
   i) cooling as in step c);
   j) adjusting the pH to a pH within the range of 7.5 to 8.5;
   k) adding pancreatin at an activity ranging from 1,000 to 100,000 N.F. units per gram protein in the starting egg albumen;
   l) incubating for a period of time ranging from 10 to 17 hours at a temperature ranging from 40° to 50°C at a pH ranging from 7.5 to 8.5; and
   m) heating to inactivate the enzyme followed by separating the product.

## Revendications

1. Un procédé d'hydrolyse enzymatique d'une substance protéinique comprenant:
   a) l'ajustement du pH d'une solution aqueuse d'une substance protéinique à un pH compris entre 7,5 et 10 et au moins 0,5 unité de pH supérieur à celle du pH originel de la solution de la substance protéinique, la solution ayant une température inférieure à 30°C, le contenu total en protéines dissoutes audit pH étant compris entre 0,5% et 20% en poids;
   b) le chauffage de la solution alcaline de l'étape (a) à une température élevée comprise entre 50°C et 150°C, à une vitesse insuffisante pour entraîner la solidification par gel de la solution;
   c) le refroidissement de la solution chauffée à une température comprise entre 30°C et 2°C dans l'heure qui suit le moment où la solution atteint son maximum de température, le refroidissement étant effectué à une vitesse suffisante pour empêcher la solidification par gel de la solution contenant la protéine; et

d) l'hydrolyse enzymatique de la protéine dans la solution ainsi traitée.

2. Un procédé selon la revendication 1, caractérisé en ce que le pH de l'étape (a) est compris entre 8 et 10.

3. Un procédé selon la revendication 1 ou 2, caractérisé en ce que pendant le refroidissement ou après le refroidissement le pH de la solution est abaissé à un pH compris entre 6 et 7,5, de préférence entre 6,5 et 7,5.

4. Un procédé selon l'une quelconque des revendications 1 à 3, caractérisé en ce que la solution contient de 1 à 20% de protéines.

5. Un procédé selon l'une quelconque des revendications 1 à 4, caractérisé en ce que la température de l'étape (b) est comprise entre 50°C et 80°C.

6. Un procédé selon l'une quelconque des revendications 1 à 5, caractérisé en ce que la protéine est hydrolysée enzymatiquement à l'aide de protéase fongique et de pancréatine.

7. Un procédé selon la revendication 6, caractérisé en ce que la protéine est d'abord mise en réaction avec la protéase fongique puis, en suite, mise en réaction avec la protéase fongique en combinaison avec la pancréatine.

8. Un procédé selon la revendication 6, caractérisé en ce que la protéine est hydrolysée avec la protéase fongique en combinaison avec la pancréatine.

9. Un procédé selon la revendication 6, caractérisé en ce que le rapport protéase fongique/pancréatine est compris entre environ 1/1 et 1/5.

10. Un procédé selon la revendication 6, caractérisé en ce que la protéase fongique a une activité comprise entre 1.000 à 100.000 unités d'hémoglobines, de préférence 8.000 à 20.000 unités d'hémoglobines par gramme de protéines dans la substance de départ.

11. Un procédé selon la revendication 7 ou 10, caractérisé en ce que la pancréatine a une activité comprise entre 1.000 et 100.000 unités N.F., de préférence entre 8.000 et 20.000 unités N.F. par gramme de protéines dans la substance de départ.

12. Un procédé selon l'une quelconque des revendications 1 à 11, caractérisé en ce que ladite substance protéinique est une protéine végétale ou une protéine animale ou une protéine microbienne.

13. Un procédé selon la revendication 12, caractérisé en ce que la protéine est du soja, de l'albumine d'oeuf, une protéine du lait, une protéine de poisson ou une protéine microbienne.

14. Un procédé selon l'une quelconque des revendications 1 à 13, caractérisé en ce que le produit d'hydrolyse est purifié par un traitement par un adsorbant en particulier le charbon actif.

15. Un procédé d'hydrolyse enzymatique de l'albumine d'oeuf qui comprend:

a) l'ajustement du pH de la solution aqueuse d'albumine d'oeuf à un pH compris entre 7 et 9,5 et au moins 0,5 unités de pH supérieur au pH naturel de l'albumine d'oeuf en solution, la teneur en protéines dissoutes étant à ce pH comprise entre 0,5% et 20% en poids;

b) le chauffage de la solution alcaline à une température élevée comprise entre 50°C et 80°C, à une vitesse insuffisante pour entraîner la solidification par gel de la solution;

c) le refroidissement de la solution chauffée à une température comprise entre 30°C et 2°C dans un intervalle de 15 mn après que la solution est atteinte la température maximale, le refroidissement étant effectué à une vitesse suffisante pour éviter la solidification par gel;

d) l'ajustement du pH à un pH compris entre 6 et 7,5;

e) l'addition d'une protéase fongique d'une activité comprise entre 1.000 et 100.000 unités d'hémoglobines par gramme de protéine dans la matière de départ;

f) l'incubation de la solution pendant une période variant entre 5 à 10 heures à une température comprise entre 45° et 55°C;

g) l'ajustement du pH comme dans l'étape (a);

h) le chauffage de la solution alcaline à une température comprise entre 75° et 80°C;

i) le refroidissement comme dans l'étape (c);

j) l'ajustement du pH à un pH compris entre 7,5 et 8,5;

k) l'addition de pancréatine à une activité comprise entre 1.000 et 100.000 unités N.F., par exemple de protéines, dans l'albumine d'oeuf de départ;

l) l'incubation pendant une période de temps comprise entre 10 et 17 heures à une température comprise entre 40° et 50°C, à un pH variant entre 7,5 et 8,5; et

m) le chauffage pour inactiver l'enzyme suivi de la séparation du produit.

**Patentansprüche**

1. Verfahren zum enzymatischen Hydrolysieren eines proteinhaltigen Materials mit den folgenden Verfahrensstufen:

a) Einstellen des pH einer wässrigen Lösung eines proteinhaltigen Materials auf einen Wert im Bereich von 7,5 bis 10, der mindestens um 0,5 über dem Wert des pH der Lösung des proteinhaltigen Materials liegt, wobei die Lösung eine Temperatur von kleiner als 30°C hat und die Konzentration des insgesamt gelösten Proteins, bestimmt bei diesem pH, im Bereich von 0,5 bis 20 Gew.-% liegt;

b) Erwärmen der nach Verfahrensstufe a) hergestellten alkalischen Lösung auf eine Temperatur im Bereich von 50 bis 150°C mit einer Geschwindigkeit, die nicht ausreicht, um ein Gelieren der Lösung auszulösen;

c) Abkühlen der erwärmten Lösung auf eine Temperatur im Bereich von 30 bis 2°C im Verlauf 1 h nachdem die Lösung ihre höchste Temperatur erreicht hat, wobei das Abkühlen mit einer solchen Geschwindigkeit durchgeführt wird, daß ein Gelieren der proteinhaltigen Lösung verhindert wird; und

d) enzymatisches Hydrolysieren des Proteins in der so behandelten Lösung.

2. Verfahren nach Anspruch 1, dadurch gekennzeichnet,

daß der pH-Wert gemäß Stufe a) im Bereich zwischen 8 und 10 liegt.

3. Verfahren nach Anspruch 1 oder 2, dadurch gekennzeichnet,

daß der pH-Wert der Lösung reduziert wird in einem Bereich zwischen 6 und 7,5 pH, vorzugsweise aber zwischen 6,5 und 7,5 pH, entweder gleichzeitig während des Abkühlens oder nach dem Abkühlen.

4. Verfahren nach einem der Ansprüche 1 bis 3, dadurch gekennzeichnet,

daß die Lösung zwischen 1% bis 20% Protein enthält.

5. Verfahren nach einem der Ansprüche 1 bis 4, dadurch gekennzeichnet, daß die Temperatur gemäß Stufe b) im Bereich zwischen 50°C und 80°C liegt.

6. Verfahren nach einem der Ansprüche 1 bis 5, dadurch gekennzeichnet,

daß das Protein enzymatisch mit Pilzprotease und Pankreatin hydrolisiert wird.

7. Verfahren nach Anspruch 6, dadurch gekennzeichnet,

daß das Protein zuerst mit Pilzprotease und danach mit einer Kombination von Pilzprotease mit Pankreatin umgesetzt wird.

8. Verfahren nach Anspruch 6, dadurch gekennzeichnet,

daß das Protein in Kombination mit Pilzprotease und Pankreatin hydrolisiert wird.

9. Verfahren nach Anspruch 6, dadurch gekennzeichnet,

daß das Verhältnis von Pilzprotease zu Pankreatin etwa zwischen 1:1 und 1:5 liegt.

10. Verfahren nach Anspruch 6, dadurch gekennzeichnet,

daß die Pilzprotease eine Aktivitätsmenge von 1000 bis 100 000 Hämoglobineinheiten, vorzugsweise aber eine Aktivitätsmenge von 8000 bis 20 000 Hämoglobineinheiten, pro Gramm Ausgangsprotein enthält.

11. Verfahren nach Anspruch 7 oder Anspruch 10, dadurch gekennzeichnet,

daß das Pankreatin eine Aktivitätsmenge von 1000 bis 100 000 NF-Einheiten, vorzugsweise aber eine Aktivitätsmenge von 8000 bis 20 000 NF-Einheiten, pro Gramm Ausgangsprotein enthält.

12. Verfahren nach einem der Ansprüche 1 bis 11, dadurch gekennzeichnet,

daß als proteinhaltiger Stoff entweder ein pflanzliches Protein, ein tierisches Protein oder eine mikrobisches Protein Verwendung findet.

13. Verfahren nach Anspruch 12, dadurch gekennzeichnet,

daß als Protein ein Sojaprotein, Eieralbumin, Milchprotein, Fischprotein oder mikroorganisches Protein verwendet wird.

14. Verfahren nach einem der Ansprüche 1 bis 13, dadurch gekennzeichnet,

daß das Hydrolyseprodukt zu seiner Reinigung mit einem Adsorptionsmittel, vorzugsweise mit Aktivkohle, behandelt wird.

15. Verfahren zum enzymatischen Hydrolysieren von Eieralbumin mit den folgenden Verfahrensstufen:

a) Einstellen des pH einer wässrigen Lösung von Eieralbumin auf einen Wert im Bereich von 7 bis 9,5, mindestens jedoch einen Wert, der um 0,5 über dem natürlichen pH des Eieralbumins in Lösung liegt, wobei die Konzentration des gelösten Proteins, bestimmt bei diesem pH, im Bereich von 0,5 bis 20 Gew.-% liegt;

b) Erwärmen der alkalischen Lösung auf eine Temperatur im Bereich von 50 bis 80°C mit einer Geschwindigkeit, die nicht ausreicht, um die Lösung gelieren zu lassen;

c) Abkühlen der erwärmten Lösung auf eine Temperatur im Bereich von 30 bis 2°C innerhalb von 15 Minuten, nachdem die Lösung ihre maximale Temperatur erreicht hat, wobei das Abkühlen mit einer Geschwindigkeit erfolgt, die ausreichend groß ist, um ein Gelieren der Lösung zu verhindern:

d) Einstellen des pH auf einen Wert im Bereich von 6 bis 7,5:

e) Zusetzen von Pilzprotease mit einer Aktivität von 1000 bis 100 000 Hämoglobineinheiten je Gramm Protein im Ausgangsmaterial;

f) Inkubieren der Lösung für eine Dauer im Bereich von 5 bis 10 Stunden bei einer Temperatur im Bereich von 45 bis 55°C;

g) Einstellen des pH wie in der Verfahrensstufe a);

h) Erwärmen der alkalischen Lösung auf eine Temperatur im Bereich von 75 bis 80°C;

i) Abkühlen wie in der Verfahrensstufe c);

j) Einstellen des pH auf einen Wert im Bereich von 7,5 bis 8,5;

k) Zusetzen von Pankreatin mit einer Aktivität im Bereich von 1000 bis 100 000 NF-Einheiten je Gramm Protein im Eieralbumin-Ausgangsmaterial;

l) Inkubieren für eine Dauer im Bereich von 10 bis 17 Stunden bei einer Temperatur im Bereich von 40 bis 50°C und bei einem pH im Bereich von 7,5 bis 8,5; und

m) Erwärmen zum Zwecke der Inaktivierung des Enzyms mit anschließendem Abtrennen des Produktes.